# EUROPEAN PATENT APPLICATION

(11) **EP 4 528 755 A1**
(43) Date of publication of application: **26.03.2025**
(21) Application number: 23807612.9
(22) Date of filing: 15.05.2023
(51) Int. Cl.: H01B 1/22, C08K 3/01, C08L 33/00, C09D 11/52

(54) **CONDUCTIVE PASTE COMPOSITION, MANUFACTURING METHOD FOR CONDUCTIVE SHEET, CONDUCTIVE SHEET, AND MANUFACTURING METHOD FOR ELECTRONIC COMPONENT**

(30) Priority: 19.05.2022 JP 2022082234; 08.07.2022 JP 2022110558
(71) Applicant: Sekisui Chemical Co., Ltd., Osaka 530-8565 (JP)
(72) Inventor: YAMAUCHI, Kenji, Koka-shi Shiga 528-8585 (JP); OTSUKA, Jo, Shunan-shi Yamaguchi 746-0006 (JP)
(74) Representative: Cabinet Beau de Loménie
(86) International application number: PCT/JP2023/018142
(87) International publication number: WO 2023/224010

(57) **Abstract**

The present invention provides a conductive paste composition that has excellent low-temperature decomposability and can be debinded at 280°C, which corresponds to a reflow soldering temperature, that can suppress oxidation of conductive metal particles, and that has excellent printability. The present invention also provides a method for producing a conductive sheet using the conductive paste composition, a conductive sheet, and a method for producing an electronic component. Provided is a conductive paste composition containing: a (meth)acrylic resin (A); inorganic particles (B); a solvent (C); and a sintering aid (D); the (meth)acrylic resin (A) containing 50% by weight or more of a segment derived from a (meth)acrylate containing an ester substituent having a branched structure, the inorganic particles (B) including conductive metal particles having an average particle size of 10 nm or greater and 1,000 nm or less, the solvent (C) having a boiling point of 120°C or higher and 250°C or lower, the sintering aid (D) having an oxygen element content of 30% by weight or more in a molecule.

## Description

### TECHNICAL FIELD

The present invention relates to conductive paste compositions, methods for producing conductive sheets, conductive sheets, and methods for producing electronic components.

### BACKGROUND ART

Conductive pastes have been widely used to form electrodes or conductive circuit patterns on substrates of printed wiring boards, solar cells, and the like. A conductive paste is composed of conductive metal particles dispersed in a binder resin solution. The type of the solvent is selected according to the technique used for printing the paste.

Recent attention has been focused on nano-metal pastes to ensure high-temperature reliability of bonding of semiconductors, such as power semiconductors. Metal particles having an average particle size of about several to several tens of nanometers sinter at far lower temperatures than the melting point of the bulk metal, because the atoms in high energy states on the particle surfaces constitute a large proportion of the metal atoms, leading to remarkably high surface diffusion of the metal atoms. In other words, nano-metal pastes enable sintering at or below a temperature corresponding to a reflow soldering temperature, achieving a more reliable bonding state than soldering.

To produce such nano-sized metal particles, atomizing methods have been studied for silver and other various transition metals. Copper is particularly preferred because it is less prone to electromigration and relatively inexpensive. Copper, however, is easily oxidized at the metal surface and thus requires prevention of oxidation in firing for actual use.

For example, Patent Literature 1 discloses a conductive copper paste containing copper powder, fine copper powder, a copper salt of an aliphatic monocarboxylic acid, a (dialkylamino)alkylamine, and an organic solvent containing an alcoholic hydroxy group. Patent Literature 1 states that a coating film of the conductive copper paste is fired by heating at a temperature of 350°C or higher and 400°C or lower in a reducing atmosphere containing hydrogen gas.

Patent Literature 2 discloses a metal-particle-dispersed solution containing metal particles (P) having an average primary particle size of 1 to 150 nm, an organic solvent (A) containing an amide group-containing compound, an organic solvent (B) containing an alcohol having a boiling point of 100°C or higher at normal temperature, an organic solvent (C) containing an aldehyde compound, and an organic solvent (D) containing an amine compound. Patent Literature 2 teaches that such a composition provides a reducing effect on the surface of the metal particles (P) in heating at 150°C to 200°C, thus suppressing oxidation of the sintered article.

### CITATION LIST

### - Patent Literature

Patent Literature 1: JP 5506042 B
Patent Literature 2: JP 5809918 B

### SUMMARY OF INVENTION

### - Technical Problem

However, the conductive copper paste disclosed in Patent Literature 1 cannot be used in semiconductor bonding because the firing temperature is too high, i.e., 350°C to 400°C. Moreover, when the paste is fired at high temperature, the organic solvent or the dispersant may be pyrolyzed and oxidize the metal particles even in a nitrogen atmosphere. The metal-particle-dispersed solution disclosed in Patent Literature 2 cannot be printed by screen printing or other similar technique because it contains no binder resin.

Thus, there is a need for a conductive paste composition that is decomposable at low temperature, can suppress oxidation of conductive metal particles, and has excellent printability.

The present invention aims to provide a conductive paste composition that has excellent low-temperature decomposability and can be debinded at 280°C, which corresponds to a reflow soldering temperature, that can suppress oxidation of conductive metal particles, and that has excellent printability. The present invention also aims to provide a method for producing a conductive sheet using the conductive paste composition, a conductive sheet, and a method for producing an electronic component.

### - Solution to problem

The disclosure (1) relates to a conductive paste composition containing: a (meth)acrylic resin (A); inorganic particles (B); a solvent (C); and a sintering aid (D); the (meth)acrylic resin (A) containing 50% by weight or more of a segment derived from a (meth)acrylate containing an ester substituent having a branched structure, the inorganic particles (B) including conductive metal particles having an average particle size of 10 nm or greater and 1,000 nm or less, the solvent (C) having a boiling point of 120°C or higher and 250°C or lower, the sintering aid (D) having an oxygen element content of 30% by weight or more in a molecule.

The disclosure (2) relates to the conductive paste composition according to the disclosure (1), wherein the inorganic particles (B) include copper-containing conductive metal particles, and the sintering aid (D) contains at least one selected from the group consisting of adipic acid and its derivatives, glutaric acid and its derivatives, pimelic acid and its derivatives, suberic acid and its derivatives, citric acid and its derivatives, succinic acid and its derivatives, maleic acid and its derivatives, malonic acid and its derivatives, tricarballylic acid and its derivatives, trimellitic acid and its derivatives, itaconic acid and its derivatives, citraconic acid and its derivatives, diglycolic acid and its derivatives, 2-methoxyacetic acid and its derivatives, butanetetracarboxylic acid and its derivatives, glycerol derivatives, and pentaerythritol derivatives.

The disclosure (3) relates to the conductive paste composition according to the disclosure (2), wherein the sintering aid (D) is a polycarboxylic anhydride.

The disclosure (4) relates to the conductive paste composition according to any one of the disclosures (1) to (3), wherein the (meth)acrylic resin (A) contains at least one selected from the group consisting of a segment derived from isobutyl methacrylate and a segment derived from 2-ethylhexyl methacrylate as the segment derived from a (meth)acrylate containing an ester substituent having a branched structure.

The disclosure (5) relates to the conductive paste composition according to the disclosure (4), wherein the (meth)acrylic resin (A) further contains a segment derived from n-butyl methacrylate.

The disclosure (6) relates to the conductive paste composition according to any one of the disclosures (3) to (5), wherein a total amount of a segment derived from isobutyl methacrylate, a segment derived from n-butyl methacrylate, and a segment derived from 2-ethylhexyl methacrylate is 80% by weight or more in the (meth)acrylic resin (A).

The disclosure (7) relates to the conductive paste composition according to any one of the disclosures (1) to (6), wherein an amount of the sintering aid (D) is 10 parts by weight or more and 30 parts by weight or less relative to 100 parts by weight of the (meth)acrylic resin (A).

The disclosure (8) relates to the conductive paste composition according to any one of the disclosures (1) to (7), wherein the (meth)acrylic resin (A) further contains a segment derived from a polyalkylene glycol (meth)acrylate containing a linear alkylene glycol unit and having an oxygen element content of 10% by weight or more.

The disclosure (9) relates to the conductive paste composition according to any one of the disclosures (1) to (8), wherein the conductive paste composition has a decomposition percentage excluding the inorganic particles (B) of 95% by weight or higher when the conductive paste is printed at a thickness of 0.3 mm, dried in a forced convection oven at 120°C for 1 hour, then heated to 280°C at a temperature rise rate of 10°C/min in a nitrogen atmosphere, and held at 280°C for 1 hour.

The disclosure (10) relates to a method for producing a conductive sheet, including the steps of: coating a release substrate with the conductive paste composition according to any one of the disclosures (1) to (9); and drying the coated release substrate.

The disclosure (11) relates to a conductive sheet containing: a (meth)acrylic resin (A); inorganic particles (B); and a sintering aid (D); the (meth)acrylic resin (A) containing 50% by weight or more of a segment derived from a (meth)acrylate containing an ester substituent having a branced structure, the inorganic particles (B) including conductive metal particles having an average particle size of 10 nm or greater and 1,000 nm or less, the sintering aid (D) having an oxygen element content of 30% by weight or more in a molecule.

The disclosure (12) relates to the conductive sheet according to the disclosure (11), wherein the sintering aid (D) contains at least one selected from the group consisting of adipic acid and its derivatives, glutaric acid and its derivatives, pimelic acid and its derivatives, suberic acid and its derivatives, citric acid and its derivatives, succinic acid and its derivatives, maleic acid and its derivatives, malonic acid and its derivatives, tricarballylic acid and its derivatives, trimellitic acid and its derivatives, itaconic acid and its derivatives, citraconic acid and its derivatives, diglycolic acid and its derivatives, 2-methoxyacetic acid and its derivatives, butanetetracarboxylic acid and its derivatives, glycerol derivatives, and pentaerythritol derivatives.

The disclosure (13) relates to the conductive sheet according to the disclosure (12), wherein the sintering aid (D) is a polycarboxylic anhydride.

The disclosure (14) relates to the conductive sheet according to any one of the disclosures (11) to (13), wherein the (meth)acrylic resin (A) contains at least one selected from the group consisting of a segment derived from isobutyl methacrylate and a segment derived from 2-ethylhexyl methacrylate as the segment derived from a (meth)acrylate containing an ester substituent having a branched structure.

The disclosure (15) relates to the conductive sheet according to the disclosure (14), wherein the (meth)acrylic resin (A) further contains a segment derived from n-butyl methacrylate.

The disclosure (16) relates to the conductive sheet according to any one of the disclosures (13) to (15), wherein a total amount of a segment derived from isobutyl methacrylate, a segment derived from n-butyl methacrylate, and a segment derived from 2-ethylhexyl methacrylate is 80% by weight or more in the (meth)acrylic resin (A).

The disclosure (17) relates to the conductive sheet according to any one of the disclosures (11) to (16), wherein an amount of the sintering aid (D) is 10 parts by weight or more and 30 parts by weight or less relative to 100 parts by weight of the (meth)acrylic resin (A).

The disclosure (18) relates to the conductive sheet according to any one of the disclosures (11) to (17), wherein the (meth)acrylic resin (A) further contains a segment derived from a polyalkylene glycol (meth)acrylate containing a linear alkylene glycol unit and having an oxygen element content of 10% by weight or more.

The disclosure (19) relates to a method for producing an electronic component, including the steps of: drying the conductive paste composition according to any one of the disclosures (1) to (9); and firing at a temperature of 280°C or lower after the drying.

The disclosure (20) relates to a method for producing an electronic component, including the step of firing the conductive sheet according to any one of the disclosures (11) to (18) at a temperature of 280°C or lower.

The present invention is described in detail below.

To develop a conductive paste composition that can be debinded and fired in a nitrogen atmosphere at or below 280°C, which corresponds to a reflow soldering temperature, the present inventors studied the decomposition temperature properties of various (meth)acrylic resins. The study showed that the pyrolysis can be completed in a nitrogen atmosphere at or below 280°C, which corresponds to a reflow soldering temperature, by combining a (meth)acrylic resin (A) containing a predetermined percentage of a segment derived from a (meth)acrylate containing an ester substituent having a branched structure with a sintering aid (D) containing a predetermined percentage of oxygen in a molecule. The inventors also have found out that the oxidation of the conductive metal particles can be suppressed using a conductive paste composition obtained by combining the above components with inorganic particles (B) having an average particle size within a predetermined range and a solvent (C) having a boiling point within a predetermined range, or using a conductive sheet obtained by drying the composition. The inventors also have found out that such a conductive paste composition has high storage stability and excellent printability, and thus completed the present invention.

### <(Meth)acrylic resin (A)>

The conductive paste composition contains a (meth)acrylic resin (A).

The (meth)acrylic resin (A) contains a segment derived from a (meth)acrylate containing an ester substituent having a branched structure.

A (meth)acrylic resin mainly composed of a (meth)acrylate containing an ester substituent having a branched structure has a lower decomposition end temperature than a (meth)acrylic resin mainly composed of a (meth)acrylate having a linear ester substituent. A (meth)acrylic resin in an environment hotter than its ceiling temperature is depolymerized into monomers, but a (meth)acrylate containing an ester substituent having a branched structure is characteristically less likely to repolymerize and thus has a low decomposition end temperature. The (meth)acrylic resin (A) having the above structure thus has excellent low-temperature decomposability.

Examples of the (meth)acrylate containing an ester substituent having a branched structure include an alkyl (meth)acrylate containing a branched alkyl group and a polyalkylene glycol (meth)acrylate containing a branched alkylene glycol unit.

The ester substituent has a carbon number of preferably 3 or greater, more preferably 4 or greater and preferably 20 or less, more preferably 15 or less, still more preferably 12 or less, for example 10 or less.

The ester substituent has a carbon number of preferably 3 to 20, more preferably 4 to 15, still more preferably 4 to 12, further preferably 4 to 10.

Examples of the alkyl (meth)acrylate containing a branched alkyl group include isopropyl (meth)acrylate, isobutyl (meth)acrylate, s-butyl (meth)acrylate, t-butyl (meth)acrylate, isopentyl (meth)acrylate, isohexyl (meth)acrylate, 2-ethylhexyl (meth)acrylate, isooctyl (meth)acrylate, isononyl (meth)acrylate, and isodecyl (meth)acrylate.

Preferred among these are isopropyl (meth)acrylate, isobutyl (meth)acrylate, s-butyl (meth)acrylate, 2-ethylhexyl (meth)acrylate, and isodecyl (meth)acrylate. More preferred are isopropyl methacrylate, isobutyl methacrylate, s-butyl methacrylate, 2-ethylhexyl methacrylate, and isodecyl methacrylate. Still more preferred are isobutyl methacrylate and 2-ethylhexyl methacrylate.

Examples of the polyalkylene glycol (meth)acrylate containing a branched alkylene glycol unit include those containing a propylene glycol unit. The polyalkylene glycol (meth)acrylate containing a branched alkylene glycol unit may have an alkoxy group at an end. Examples of the alkoxy group include a methoxy group, an ethoxy group, and a butoxy group.

The polyalkylene glycol (meth)acrylate containing a branched alkylene glycol unit preferably contains 3 or more, more preferably 4 or more and preferably 10 or fewer, more preferably 8 or fewer alkylene glycol units.

The polyalkylene glycol (meth)acrylate containing a branched alkylene glycol unit preferably contains 3 to 10, more preferably 4 to 8 alkylene glycol units.

The amount of the segment derived from a (meth)acrylate containing an ester substituent having a branched structure is 50% by weight or more in the (meth)acrylic resin (A).

The segment in an amount within the above range allows the conductive paste composition to have excellent low-temperature decomposability.

The amount of the segment derived from a (meth)acrylate containing an ester substituent having a branched structure is preferably 60% by weight or more, more preferably 70% by weight or more and preferably 100% by weight or less, more preferably 90% by weight or less.

The amount of the segment derived from a (meth)acrylate containing an ester substituent having a branched structure in the (meth)acrylic resin (A) is preferably 50 to 100% by weight, more preferably 60 to 90% by weight, still more preferably 70 to 90% by weight.

The amount can be measured by pyrolysis GC-MS, for example.

The (meth)acrylic resin (A) preferably contains at least one selected from the group consisting of a segment derived from isobutyl methacrylate and a segment derived from 2-ethylhexyl methacrylate as the segment derived from a (meth)acrylate containing an ester substituent having a branched structure.

The (meth)acrylic resin (A) having the above structure allows the conductive paste composition to have better low-temperature decomposability.

The (meth)acrylic resin (A) may further contain other segments such as a segment derived from a (meth)acrylate containing a linear ester substituent or a segment derived from a (meth)acrylate containing a cyclic ester substituent.

Examples of the (meth)acrylate containing a linear ester substituent include an alkyl (meth)acrylate containing a linear alkyl group and a polyalkylene glycol (meth)acrylate containing a linear alkylene glycol unit.

The ester substituent has a carbon number of preferably 1 or greater, more preferably 2 or greater and preferably 10 or less, more preferably 6 or less.

The ester substituent has a carbon number of preferably 1 to 10, more preferably 2 to 6.

Examples of the alkyl (meth)acrylate containing a linear alkyl group include methyl (meth)acrylate, ethyl (meth)acrylate, n-propyl (meth)acrylate, n-butyl (meth)acrylate, n-pentyl (meth)acrylate, and n-hexyl (meth)acrylate. Preferred among these are methyl (meth)acrylate, ethyl (meth)acrylate, and n-butyl (meth)acrylate. More preferred are methyl methacrylate, ethyl methacrylate, and n-butyl methacrylate. The (meth)acrylic resin (A) preferably further contains a segment derived from n-butyl methacrylate to allow the conductive paste composition to have better low-temperature decomposability.

Examples of the polyalkylene glycol (meth)acrylate containing a linear alkylene glycol unit include those containing an ethylene glycol unit and those containing a trimethylene glycol unit. The polyalkylene glycol (meth)acrylate containing a linear alkylene glycol unit may have an alkoxy group at an end. Examples of the alkoxy group include a methoxy group, an ethoxy group, and a butoxy group. The alkoxy group is not branched. Preferred among these are polyalkylene glycol (meth)acrylates containing an ethylene glycol unit. More preferred is methoxypolyethylene glycol (meth)acrylate.

The polyalkylene glycol (meth)acrylate containing a linear alkylene glycol unit preferably contains 4 or more, more preferably 10 or more and preferably 23 or fewer, more preferably 20 or fewer alkylene glycol units.

The polyalkylene glycol(meth)acrylate containing a linear alkylene glycol unit preferably contains 4 to 23, more preferably 10 to 20 alkylene glycol units.

Examples of the (meth)acrylate containing a cyclic ester substituent include (meth)acrylates containing a cyclic alkyl group such as cyclohexyl (meth)acrylate and isobornyl (meth)acrylate and glycidyl group-containing (meth)acrylates such as glycidyl (meth)acrylate, 4-hydroxybutyl (meth)acrylate glycidyl ether, and 3,4-epoxycyclohexylmethyl (meth)acrylate.

The (meth)acrylic resin (A) particularly preferably produced using an oxygen-rich monomer. Since polyalkylene glycol (meth)acrylates containing a linear alkylene glycol unit have high oxygen element contents, the (meth)acrylic resin (A) preferably contains a segment derived from such a (meth)acrylate.

The polyalkylene glycol (meth)acrylate containing a linear alkylene glycol unit has an oxygen element content of preferably 10% by weight or more, more preferably 30% by weight or more, still more preferably 35% by weight or more.

Depolymerization of a (meth)acrylic resin is an endothermic reaction. The heat necessary for decomposition tends not to be obtained in low-temperature decomposition. A (meth)acrylic resin containing the above segment derived from an oxygen-rich monomer can decompose by combustion using its own oxygen at a temperature around its ceiling temperature even in a nitrogen atmosphere. Such a (meth)acrylic resin thus can have higher low-temperature decomposability.

In the (meth)acrylic resin (A), the amount of the segment derived from a (meth)acrylate containing a linear ester substituent is for example 0% by weight or more, preferably 1% by weight or more, more preferably 5% by weight or more and preferably 20% by weight or less, more preferably 10% by weight or less.

In the (meth)acrylic resin (A), the amount of the segment derived from a (meth)acrylate containing a linear ester substituent is preferably 0 to 20% by weight, more preferably 1 to 10% by weight, still more preferably 5 to 10% by weight.

The segment in an amount within the above range can improve handling properties such as printability.

The amount can be measured by pyrolysis GC-MS, for example.

In the (meth)acrylic resin (A), the total amount of the segment derived from isobutyl methacrylate, the segment derived from n-butyl methacrylate, and the segment derived from 2-ethylhexyl methacrylate is preferably 60% by weight or more.

The (meth)acrylic resin (A) satisfying the above structure allows the conductive paste composition to have better low-temperature decomposability.

The total amount is more preferably 70% by weight or more, still more preferably 80% by weight or more. The upper limit thereof is not limited and may be for example 100% by weight or less, more preferably 90% by weight or less.

The total amount is preferably 60 to 100% by weight, more preferably 70 to 100% by weight, still more preferably 80 to 90% by weight.

The amount can be measured by pyrolysis GC-MS, for example.

The (meth)acrylic resin (A) preferably has, at a molecular end, at least one selected from the group consisting of a carboxy group, a hydroxy group, and a sulfonic acid group.

The (meth)acrylic resin (A) having the above structure can improve the dispersibility of the inorganic particles (B).

These groups can be introduced to a molecular end by, for example, using a mercapto derivative such as mercaptosuccinic acid or mercaptopropanediol as a chain transfer agent or using potassium persulfate, ammonium persulphate, or the like as a polymerization initiator in producing the (meth)acrylic resin (A).

The (meth)acrylic resin (A) has a weight average molecular weight (Mw) of preferably 20,000 or greater, more preferably 200,000 or greater and preferably 2,000,000 or less, more preferably 400,000 or less.

The (meth)acrylic resin (A) has a weight average molecular weight (Mw) of preferably 20,000 to 2,000,000, more preferably 200,000 to 400,000.

A conductive paste composition produced using the (meth)acrylic resin (A) is applied by screen printing or dispensing. The molecular weight is thus preferably low because too high a molecular weight results in poor printability. The molecular weight is also preferably somewhat high because too low a molecular weight results in a brittle conductive sheet. A Mw of 20,000 or greater can prevent the conductive paste composition from having too low a viscosity and also lead to good dispersibility of the inorganic particles. A Mw of 200,000 or greater allows the resulting conductive sheet to have higher strength. A Mw of 2,000,000 or less allows the conductive paste composition to have sufficiently high viscosity, improved storage stability, and excellent printability. A Mw of 400,000 or less can lead to further improved printability.

The (meth)acrylic resin (A) typically has a ratio (Mw/Mn) of weight average molecular weight (Mw) to number average molecular weight (Mn) of 1 or greater, preferably 1.5 or greater, more preferably 2 or greater and preferably 5 or less, more preferably 3 or less.

The Mw/Mn is preferably 1.5 to 5, more preferably 2 to 3.

With a Mw/Mn within the above range, the (meth)acrylic resin (A) contains an appropriate amount of components having low degrees of polymerization, so that the conductive paste composition can have a viscosity in a suitable range, leading to high productivity.

The weight average molecular weight (Mw) and the number average molecular weight (Mn) are average molecular weights in terms of polystyrene. The Mw and Mn can be measured by GPC measurement using a column LF-804 (available from Showa Denko K.K.), for example.

The (meth)acrylic resin (A) has a glass transition temperature (Tg) of preferably 20°C or higher, more preferably 30°C or higher and preferably 60°C or lower, more preferably 50°C or lower.

The glass transition temperature (Tg) is preferably 20°C to 60°C, more preferably 30°C to 50°C.

The glass transition temperature (Tg) can be measured using a differential scanning calorimeter (DSC), for example.

The amount of the (meth)acrylic resin (A) in the conductive paste composition is not limited but is preferably 3% by weight or more, more preferably 3.5% by weight or more, still more preferably 4% by weight or more and preferably 30% by weight or less, more preferably 12% by weight or less.

The amount of the (meth)acrylic resin (A) in the conductive paste composition is preferably 3 to 30% by weight, more preferably 3.5 to 30% by weight, still more preferably 4 to 12% by weight.

The (meth)acrylic resin (A) in an amount within the above range enables production of a conductive paste composition that can be fired at low temperature.

The (meth)acrylic resin (A) may be produced by any method. For example, first, an organic solvent or the like is added to a raw material monomer mixture containing monomers such as the (meth)acrylate containing an ester substituent having a branched structure to give a monomer mixture solution. Subsequently, a polymerization initiator is added to the obtained monomer mixture solution for polymerization to give a raw material (meth)acrylic resin (A).

The polymerization may be performed by any method such as emulsion polymerization, suspension polymerization, bulk polymerization, interfacial polymerization, and solution polymerization. Preferred among these is solution polymerization.

Examples of the polymerization initiator include dilauryl peroxide, p-menthane hydroperoxide, diisopropylbenzene hydroperoxide, 1,1,3,3-tetramethylbutyl hydroperoxide, cumene hydroxyperoxide, t-butyl hydroxyperoxide, cyclohexanone peroxide, and disuccinic acid peroxide.

Examples of commercial products of these include PERMENTA H, PERCUMYL P, PEROCTA H, PERCUMYL H-80, PEROYL 355, PERBUTYL H-69, PERHEXA H, PEROYL SA, and PEROYL L (all available from NOF Corporation), and Trigonox 27 and Trigonox 421 (all available from Nouryon).

A group such as a carboxy group, a hydroxy group, or sulfonic acid group can be introduced to a molecular end by, for example, using a mercapto derivative such as mercaptosuccinic acid or mercaptopropanediol as a chain transfer agent or using potassium persulfate, ammonium persulphate, or the like as a polymerization initiator in the polymerization.

### <Inorganic particles (B)>

The conductive paste composition contains inorganic particles (B).

The inorganic particles (B) include conductive metal particles having an average particle size of 10 nm or greater and 1,000 nm or less.

Examples of the metal as the material of the conductive metal particles include copper, iron, nickel, palladium, platinum, gold, silver, aluminum, tungsten, and their alloys.

In particular, copper-containing conductive metal particles are most preferred because they have low resistance and low risk of electromigration.

The copper may be cuprous oxide (Cu₂O) because the surface oxygen can be removed by a combustion effect of the later-described sintering aid (D) and thus preferable conduction can be ensured. The inorganic particles (B) may include copper and cuprous oxide.

The inorganic particles may be surface-protected with, for example, an amine, a diol, a polyol, a thiol, or a carboxylic acid because the surface-protecting agent is combusted, decomposed, or evaporated by firing and thus preferable conduction can be ensured.

The copper nanoparticles with such a small average particle size may be produced by any method, such as liquid phase reduction method, a gas phase method (electroreduction method), or a micelle method.

The conductive metal particles have an average particle size of 10 nm or greater and 1,000 nm or less.

An average particle size within the above range allows the conductive metal particles to have low-temperature sinterability.

The average particle size is preferably 50 nm or greater, more preferably 100 nm or greater and preferably 500 nm or less, more preferably 200 nm or less.

The average particle size is preferably 10 to 1,000 nm, more preferably 50 to 500 nm, still more preferably 100 to 200 nm.

The average particle size can be measured by a BET method. Specifically, it can be measured in accordance with the description of "The Big Problem of Small Particles: A Comparison of Methods for Determination of Particle Size in Nanocrystalline Anatase Powders Weibel, A. et al. Chem. Mater. 2005, 17, 2378."

The amount of the conductive metal particles in the conductive paste composition is not limited but is preferably 80% by weight or more, more preferably 85% by weight or more and preferably 95% by weight or less, more preferably 90% by weight or less.

The amount of the conductive metal particles in the conductive paste composition is preferably 80 to 95% by weight, more preferably 85 to 90% by weight.

The conductive metal particles in an amount within the above range allow the conductive paste composition to have excellent printability.

The inorganic particles (B) may include inorganic particles other than the conductive metal particles.

Examples of the inorganic particles other than the conductive metal particle include glass powder. Glass powder included in the inorganic particles (B) allows the conductive metal particles to aggregate to form a dense layer when the conductive paste composition is sintered.

The glass powder is not limited. Examples thereof include powders of glass such as bismuth oxide glass, silicate glass, lead glass, zinc glass, or boron glass, and various silicon oxide glass powders such as CaO-Al₂O₃-SiO₂ glass powder, MgO-Al₂O₃-SiO₂ glass powder, and LiO₂-Al₂O₃-SiO₂ glass powder. Usable glass powders include SnO-B₂O₃-P₂O₅-Al₂O₃ mixtures, PbO-B₂O₃-SiO₂ mixtures, BaO-ZnO-B₂O₃-SiO₂ mixtures, ZnO-Bi₂O₃-B₂O₃-SiO₂ mixtures, Bi₂O₃-B₂O₃-BaO-CuO mixtures, Bi₂O₃-ZnO-B₂O₃-Al₂O₃-SrO mixtures, ZnO-Bi₂O₃-B₂O₃ mixtures, Bi₂O₃-SiO₂ mixtures, P₂O₅-Na₂O-CaO-BaO-Al₂O₃-B₂O₃ mixtures, P₂O₅-SnO mixtures, P₂O₅-SnO-B₂O₃ mixtures, P₂O₅-SnO-SiO₂ mixtures, CuO-P₂O₅-RO mixtures, SiO₂-B₂O₃-ZnO-Na₂O-Li₂O-NaF-V₂O₅ mixtures, P₂O₅-ZnO-SnO-R₂O-RO mixtures, B₂O₃-SiO₂-ZnO mixtures, B₂O₃-SiO₂-Al₂O₃-ZrO₂ mixtures, SiO₂-B₂O₃-ZnO-R₂O-RO mixtures, SiO₂-B₂O₃-Al₂O₃-RO-R₂O mixtures, SrO-ZnO-P₂O₅ mixtures, SrO-ZnO-P₂O₅ mixtures, and BaO-ZnO-B₂O₃-SiO₂ mixtures. R is an element selected from the group consisting of Zn, Ba, Ca, Mg, Sr, Sn, Ni, Fe, and Mn.

Particularly preferred are PbO-B₂O₃-SiO₂ mixture glass powders and lead-free glass powders such as BaO-ZnO-B₂O₃-SiO₂ mixtures or ZnO-Bi₂O₃-B₂O₃-SiO₂ mixtures.

The amount of the inorganic particles other than the conductive metal particles in the conductive paste composition is not limited but is preferably 0.1% by weight or more, more preferably 1% by weight or more and preferably 5% by weight or less, more preferably 3% by weight or less.

The amount of the inorganic particles other than the conductive metal particles in the conductive paste composition is preferably 0.1 to 5% by weight, more preferably 1 to 3% by weight.

### <Solvent (C)>

The conductive paste composition contains a solvent (C).

The solvent (C) is an organic solvent having a boiling point of 120°C or higher and 250°C or lower.

The solvent (C) does not evaporate too quickly, and can be removed at a drying temperature at or below the decomposition starting temperature of the (meth)acrylic resin, leading to improved productivity of electronic components.

The solvent (C) differs from the later-described sintering aid (D).

The organic solvent is not limited but is preferably one excellent in properties such as application properties, drying properties, and dispersibility of conductive inorganic particles in electronic component production.

Examples of the organic solvent include ethylene glycol ethyl ether (135°C), ethylene glycol monobutyl ether (171°C), ethylene glycol monoethyl ether acetate (246°C), diethylene glycol monoethyl ether (196°C), diethylene glycol monomethyl ether (193°C), diethylene glycol monoisobutyl ether (160°C), butyl carbitol (231°C), butyl carbitol acetate (247°C), terpineol (219°C), terpineol acetate (220°C), dihydroterpineol (246°C), dihydroterpineol acetate (246°C), texanol (244°C), isophorone (215°C), isoamyl acetate (142°C), hexyl acetate (172°C), butyl acetate (126°C), butyl lactate (170°C), dioctyl phthalate (220°C), dioctyl adipate (214°C), benzyl alcohol (205°C), phenyl propylene glycol (244°C), o-cresol (192°C), m-cresol (202°C), p-cresol (202°C), and xylene (139°C). Preferred among these are terpineol, terpineol acetate, dihydroterpineol, dihydroterpineol acetate, diethylene glycol monoethyl ether, diethylene glycol monomethyl ether, diethylene glycol monoisobutyl ether, butyl carbitol, butyl carbitol acetate, texanol, isoamyl acetate, butyl acetate, and xylene. More preferred among these are terpineol, terpineol acetate, dihydroterpineol, and dihydroterpineol acetate. Each of these organic solvents may be used alone, or two or more of them may be used in combination. The temperatures in the parentheses represent the boiling points.

The organic solvent has a boiling point of 120°C or higher and 250°C or lower.

A boiling point of 120°C or higher prevents the solvent from evaporating too quickly, allowing the conductive paste composition to have excellent handleability. A boiling point of 250°C or lower can lead to improved productivity of electronic components.

The boiling point is preferably 160°C or higher and preferably 220°C or lower.

The boiling point is preferably 120°C to 250°C, more preferably 160°C to 220°C.

The amount of the solvent (C) in the conductive paste composition is not limited but is preferably 4% by weight or more, more preferably 4.5% by weight or more, still more preferably 5% by weight or more and preferably 16% by weight or less, more preferably 12% by weight or less, still more preferably 10% by weight or less, further preferably 8% by weight or less, for example 6% by weight or less.

The amount of the solvent (C) in the conductive paste composition is preferably 4 to 16% by weight, more preferably 4 to 12% by weight, still more preferably 4.5 to 10% by weight, further preferably 5 to 10% by weight, particularly preferably 5 to 8% by weight, more particularly preferably 5 to 6% by weight.

The solvent (C) in an amount within the above range can improve the application properties and the dispersibility of the conductive metal particles.

### <Sintering aid (D)>

The conductive paste composition contains a sintering aid (D).

The sintering aid (D) has an oxygen element content of 30% by weight or more in a molecule.

The sintering aid (D) has the effects of plasticizing the (meth)acrylic resin as the binder resin and improving the adhesion of the conductive paste composition to a substrate when the paste composition is printed. When heated in a nitrogen atmosphere at around 250°C, the sintering aid (D) combusts consuming its own oxygen and thereby can promote the decomposition of the (meth)acrylic resin. The sintering aid (D) also exhibits the effect of removing the oxide film on the metal surface. Thus, the sintering aid (D) can enhance the low-temperature decomposability of the (meth)acrylic resin while suppressing oxidation of the conductive metal particles.

The sintering aid (D) more preferably has an oxygen element content of 35% by weight or more in a molecule.

The upper limit thereof is not limited. For example, the upper limit is 65% by weight or less and preferably 55% by weight or less.

The oxygen element content is preferably 30 to 65% by weight, more preferably 35 to 55% by weight.

The oxygen element content can be calculated based on the molecular weight of the sintering aid (D) and the atomic weight of oxygen.

Examples of the sintering aid (D) include carboxylic acids and their derivatives and polyalcohols and their derivatives.

Examples of the derivatives include esters and anhydrides.

Examples of the carboxylic acids and their derivatives include monocarboxylic acids and their derivatives and polycarboxylic acids and their derivatives. Specific examples include malonic acid (62% by weight), malonic anhydride (56% by weight), diethyl acetylmalonate (40% by weight), dimethyl methoxymalonate (49% by weight), diethyl methoxymalonate (42% by weight), diethyl ethoxymalonate (39% by weight), succinic acid (54% by weight), succinic anhydride (48% by weight), dimethyl acetylsuccinate (43% by weight), diethyl acetylsuccinate (37% by weight), diethyl succinate (37% by weight), maleic acid (55% by weight), maleic anhydride (49% by weight), glutaric acid (48% by weight), glutaric anhydride (42% by weight), adipic acid (44% by weight), dimethyl adipate (37% by weight), monomethyl adipate (40% by weight), monoethyl adipate (37% by weight), pimelic acid (40% by weight), suberic acid (37% by weight), azelaic acid (34% by weight), sebacic acid (32% by weight), tricarballylic acid (55% by weight), tricarballylic anhydride (51% by weight), trimellitic acid (46% by weight), trimellitic anhydride (42% by weight), trimethyl trimellitate (38% by weight), butanetetracarboxylic acid (55% by weight), butanetetracarboxylic dianhydride (48% by weight), 3-oxoglutaric acid (55% by weight), itaconic acid (49% by weight), itaconic anhydride (43% by weight), citraconic acid (49% by weight), citraconic anhydride (43% by weight), diglycolic acid (60% by weight), diglycolic anhydride (55% by weight), 2-methoxyacetic acid (53% by weight), 2-methoxyacetic anhydride (49% by weight), cyclopentanetetracarboxylic acid (52% by weight), cyclopentanetetracarboxylic anhydride (46% by weight), citric acid (58% by weight), triethyl citrate (41% by weight), tripropyl citrate (35% by weight), tributyl citrate (31% by weight), trimethyl acetylcitrate (46% by weight), triethyl acetylcitrate (40% by weight), tributyl acetylcitrate (32% by weight), and citric anhydride (55% by weight).

Examples of the polyalcohols and their derivatives include glycerol (52% by weight), pentaerythritol (47% by weight), triacetin (44% by weight), tripropionin (37% by weight), and pentaerythritol tetraacetate (42% by weight).

Each of the sintering aids (D) may be used alone, or two or more thereof may be used in combination. The percentages in the parentheses represent the oxygen element contents.

From the standpoint of the compatibility with the organic solvent (C), preferred are adipic acid and its derivatives, glutaric acid and its derivatives, pimelic acid and its derivatives, suberic acid and its derivatives, citric acid and its derivatives, succinic acid and its derivatives, maleic acid and its derivatives, butanetetracarboxylic acid and its derivatives, tricarballylic acid and its derivatives, trimellitic acid and its derivatives, itaconic acid and its derivatives, citraconic acid and its derivatives, diglycolic acid and its derivatives, 2-methoxyacetic acid and its derivatives, cyclopentanetetracarboxylic acid and its derivatives, glycerol derivatives, and pentaerythritol derivatives. More preferred are adipic acid derivatives, citric acid derivatives, succinic acid derivatives, maleic acid derivatives, glycerol derivatives, and pentaerythritol derivatives. Still more preferred are citric acid and its derivatives, succinic acid and its derivatives, glycerol derivatives, pentaerythritol derivatives, glutaric acid and its derivatives, adipic acid and its derivatives, suberic acid and its derivatives, maleic acid and its derivatives, diglycolic acid and its derivatives, 2-methoxyacetic acid and its derivatives, and butanetetracarboxylic acid and its derivatives. Further preferred are tripropyl citrate, triethyl acetylcitrate, triethyl citrate, tributyl acetylcitrate, tributyl citrate, dimethyl acetylsuccinate, tripropionin, triacetin, pentaerythritol tetraacetate, 3-oxoglutaric acid, monomethyl adipate, suberic acid, succinic anhydride, maleic anhydride, diglycolic anhydride, 2-methoxyacetic anhydride, citric anhydride, and butanetetracarboxylic dianhydride.

Acid anhydrides are preferred because they have high oxygen element contents. More preferred are succinic anhydride, maleic anhydride, glutaric anhydride, citric anhydride, malonic anhydride, tricarballylic anhydride, trimellitic anhydride, itaconic anhydride, citraconic anhydride, diglycolic anhydride, 2-methoxyacetic anhydride, and cyclopentanetetracarboxylic anhydride. Still more preferred are carboxylic anhydrides because they are decarboxylated in firing to form an aldehyde structure, thus exhibiting a reducing ability to take oxygen from a conductive metal.

The sintering aid (D) preferably has a boiling point of 200°C or higher.

Such a boiling point prevents the sintering aid (D) from evaporating together with the solvent (C) when the conductive paste composition is applied and dried, so that the sintering aid (D) can exhibit the effect of promoting debinding of the (meth)acrylic resin.

The boiling point is more preferably 260°C or higher, still more preferably 270°C or higher and preferably 390°C or lower, more preferably 350°C or lower.

The boiling point is preferably 200°C to 390°C, more preferably 260°C to 390°C, still more preferably 270°C to 350°C.

A boiling point of 270°C or higher allows the sintering aid (D) to function as a plasticizer.

Here, since the sintering aid (D) combusts below 200°C in an air atmosphere, the boiling point is preferably measured under reduced pressure. The conversion of the boiling point under reduced pressure can be performed by the method described in Science of Petroleum, Vol. II. p.1281 (1938), for example.

The sintering aid (D) preferably has a high oxygen element content. Since sintering aids with low molecular weights may evaporate below the ceiling temperature of the (meth)acrylic resin, the sintering aid (D) is preferably one having a high boiling point or a high molecular weight.

Citric acid and its derivatives are particularly preferred because they have a good balance between the oxygen element content and the boiling point. In contrast, polyalcohols and polycarboxylic acids, which are only soluble in water, are not desirable because although they have high oxygen element contents, they may absorb moisture during storage of the conductive paste composition. The sintering aid (D) preferably does not contain any aromatic group from the standpoint of the low-temperature sinterability of the paste composition.

The sintering aid (D) alone at normal temperature may be solid or liquid. With use of a (meth)acrylic resin having a low glass transition temperature, a sintering aid that is solid at normal temperature is expected to have an effect of enhancing the retention of the conductive paste composition when it is printed.

The amount of the sintering aid (D) in the conductive paste composition relative to 100 parts by weight of the (meth)acrylic resin (A) is preferably 10 parts by weight or more, more preferably 15 parts by weight or more and preferably 30 parts by weight or less, more preferably 25 parts by weight or less.

The amount of the sintering aid (D) in the conductive paste composition relative to 100 parts by weight of the (meth)acrylic resin (A) is preferably 10 to 30 parts by weight, more preferably 15 to 25 parts by weight.

The sintering aid (D) in an amount within the above range allows debinding of organic matter while the adhesion of printed images to substrates is maintained.

The amount of the sintering aid (D) in the conductive paste composition relative to 100 parts by weight of the inorganic particles (B) is preferably 0.2 parts by weight or more, more preferably 0.4 parts by weight or more and preferably 3 parts by weight or less, more preferably 2.5 parts by weight or less.

The amount of the sintering aid (D) in the conductive paste composition relative to 100 parts by weight of the inorganic particles (B) is preferably 0.2 to 3 parts by weight, more preferably 0.4 to 2.5 parts by weight.

The amount of the sintering aid (D) in the conductive paste composition is not limited but is preferably 0.1% by weight or more, more preferably 0.4% by weight or more and preferably 3% by weight or less, more preferably 2.5% by weight or less.

The amount of the sintering aid (D) in the conductive paste composition is preferably 0.1 to 3% by weight, more preferably 0.4 to 2.5% by weight.

The sintering aid (D) in an amount within the above range can lead to less firing residue of the (meth)acrylic resin (A) and the sintering aid (D).

### <Other components>

The conductive paste composition may further contain an additive such as a sintering aid having an oxygen element content of less than 30% by weight in a molecule, for example a metal oxide.

The conductive paste composition may have any viscosity. The lower limit of the viscosity measured at 20°C using a type B viscometer at a probe rotation rate of 5 rpm is preferably 0.1 Pa·s, and the upper limit thereof is preferably 100 Pa·s.

The viscosity measured at 20°C using a type B viscometer at a probe rotation rate of 5 rpm is preferably 0.1 to 100 Pa·s.

With a viscosity of 0.1 Pa·s or higher, a conductivemetal-particle-dispersed sheet obtained after applying the conductive paste composition by a method such as die-coat printing can maintain a predetermined shape. With a viscosity of 100 Pa·s or lower, sagging can be prevented when the conductive paste composition is used to fill a through-via, leading to improved printability.

The conductive paste composition preferably has a decomposition percentage excluding the inorganic particles (B) of 95% by weight or higher when the conductive paste composition is printed at a thickness of 0.3 mm, dried in a forced convection oven at 120°C for 1 hour, and then heated to 280°C at a temperature rise rate of 10°C/min in a nitrogen atmosphere.

A decomposition percentage within the above range can lead to less firing residue of the (meth)acrylic resin (A) and the sintering aid (D).

The decomposition percentage is preferably 96% by weight or more, more preferably 97% by weight or more. The upper limit thereof is not limited and may be 100% by weight or less, for example.

The decomposition percentage is preferably 95 to 100% by weight, more preferably 96 to 100% by weight, still more preferably 97 to 100% by weight.

The decomposition percentage can be measured using a thermogravimetric-differential thermal analyzer (TG-DTA). Specifically, the conductive paste composition is printed into a formed article. The weight WA before heating and the weight WB after heating of the article are measured, and the weight WC of the inorganic particles in the article is subtracted therefrom. The decomposition percentage is calculated based on the following expression.Decomposition percentage (% by weight) = (WA - WB)/(WA - WC) × 100

The conductive paste composition may be produced by any method. It may be produced by a conventionally known stirring method. Specifically, for example, the (meth)acrylic resin (A), the inorganic particles (B), the solvent (C), the sintering aid (D), and other optional components are stirred with a triple roll mill or the like. Alternatively, the inorganic particles (B), the sintering aid (D), an optional additional solvent (C), and other components are added to a resin solution after reaction obtained in the preparation of the (meth)acrylic resin (A), and they are stirred with a triple roll mill or the like.

A conductive sheet can be produced by coating a release substrate with the conductive paste composition and removing the organic solvent by drying.

The present invention also encompasses a method for producing a conductive sheet, including the steps of: coating a release substrate with the conductive paste composition; and drying the coated release substrate.

The conductive paste composition may be printed by any method such as screen printing, die-coat printing, offset printing, gravure printing, or ink-jet printing.

The coated substrate may be dried by any method. For example, it may be dried using a forced convection oven. The drying temperature is not limited and is 100°C or higher and 150°C or lower, for example.

The conductive sheet obtained in such a manner is the conductive paste from which the organic solvent has been removed.

The present invention also encompasses a conductive sheet containing: a (meth)acrylic resin (A); inorganic particles (B); and a sintering aid (D); the (meth)acrylic resin (A) containing 50% by weight or more of a segment derived from a (meth)acrylate containing an ester substituent having a branched structure, the inorganic particles (B) including conductive metal particles having an average particle size of 10 nm or greater and 1,000 nm or less, the sintering aid (D) having an oxygen element content of 30% by weight or more in a molecule.

The (meth)acrylic resin (A), the inorganic particles (B), and the sintering aid (D) may be the same as those constituting the conductive paste composition.

The amount of the (meth)acrylic resin (A) in the conductive sheet is not limited but is preferably 2% by weight or more, more preferably 3% by weight or more, still more preferably 4% by weight or more and preferably 15% by weight or less, more preferably 12% by weight or less.

The amount of the (meth)acrylic resin (A) in the conductive sheet is preferably 2 to 15% by weight, more preferably 3 to 12% by weight, still more preferably 4 to 12% by weight.

The amount of the conductive metal particles in the conductive sheet is not limited but is preferably 75% by weight or more, more preferably 80% by weight or more, still more preferably 85% by weight or more and preferably 95% by weight or less, more preferably 90% by weight or less.

The amount of the conductive metal particles in conductive sheet is preferably 75 to 95% by weight, more preferably 80 to 95% by weight, still more preferably 85 to 90% by weight.

The amount of inorganic particles other than the conductive metal particles in the conductive sheet is not limited but is preferably 0.1% by weight or more, more preferably 0.5% by weight or more, still more preferably 1% by weight or more and preferably 4% by weight or less, more preferably 3% by weight or less.

The amount of the inorganic particles other than the conductive metal particles in the conductive sheet is preferably 0.1 to 4% by weight, more preferably 0.5 to 4% by weight, still more preferably 1 to 3% by weight.

The amount of the sintering aid (D) in the conductive sheet not limited but is preferably 0.1% by weight or more, more preferably 0.4% by weight or more, still more preferably 0.5% by weight or more and preferably 4% by weight or less, more preferably 3% by weight or less.

The amount of the sintering aid (D) in the conductive sheet is preferably 0.1 to 4% by weight, more preferably 0.4 to 4% by weight, still more preferably 0.5 to 3% by weight.

The amount of the sintering aid (D) in the conductive sheet relative to 100 parts by weight of the (meth)acrylic resin (A) is preferably 10 parts by weight or more, more preferably 15 parts by weight or more and preferably 30 parts by weight or less, more preferably 25 parts by weight or less.

The amount of the sintering aid (D) in the conductive sheet relative to 100 parts by weight of the (meth)acrylic resin (A) is preferably 10 to 30 parts by weight, more preferably 15 to 25 parts by weight.

The sintering aid (D) in an amount within the range allows debinding of organic matter while the adhesion of printed images to substrates is maintained.

The amount of the sintering aid (D) in the conductive sheet relative to 100 parts by weight of the inorganic particles (B) is preferably 0.2 parts by weight or more, more preferably 0.4 parts by weight or more and preferably 3 parts by weight or less, more preferably 2.5 parts by weight or less.

The amount of the sintering aid (D) in the conductive sheet relative to 100 parts by weight of the inorganic particles (B) is preferably 0.2 to 3 parts by weight, more preferably 0.4 to 2.5 parts by weight.

The conductive sheet may have any thickness. The thickness is preferably 20 µm or greater and preferably 100 µm or less.

The thickness of the conductive sheet is preferably 20 to 100 µm.

The conductive paste composition or the conductive sheet can be used to produce an electronic component.

Examples of the electronic component include die attach pastes (ACPs), die attach films (ACFs), via electrodes for TSVs and TGVs, various circuits of touch panels, RFIDs, and sensor boards, various die bonding materials, sealants of MEMS devices, electrode materials of solar cells, multilayer ceramic capacitors, LTCC, silicon capacitors, all-solid-state batteries, and the like, through-hole electrodes, IGBT semiconductor bonding materials, and SAW filters. The conductive paste composition and the conductive sheet can be also used in applications other than the electrode circuits, such as antibacterial components, electromagnetic shielding materials, catalysts, and fluorescent materials.

An electronic component with high conductivity can be obtained by printing the conductive paste composition on a substrate, removing the organic solvent by drying, and then heating in a firing furnace in an inert gas (e.g., nitrogen) atmosphere to remove the (meth)acrylic resin and sinter the conductive metal particles.

The conductive paste may be printed by any method such as screen printing, die-coat printing, offset printing, gravure printing, or ink-jet printing.

The conductive paste may be dried by any method. For example, it may be dried using a forced convection oven. The drying temperature is not limited and is 100°C or higher and 150°C or lower, for example.

The firing conditions are not limited. The firing is preferably performed at a temperature of 280°C or lower, more preferably 250°C or lower.

The temperature rise rate is preferably 20°C/min or higher.

The firing is preferably performed in a nitrogen atmosphere. When the conductive metal particles have severe surface oxidation, hydrogen can be incorporated in the nitrogen gas to be introduced into the firing furnace.

To enhance the reducing effect of the sintering aid (D), the firing treatment is preferably performed in an inert gas (e.g., nitrogen) atmosphere in an electric furnace, a muffle furnace, a plasma furnace, or the like.

For a planar electronic component, firing also can be performed by heat pressing.

The heat pressing conditions are not limited. The firing is preferably performed at a temperature of 200°C or higher and 280°C or lower at a pressure of 1 MPa or higher and 5 MPa or lower.

The electronic component such as a metal electrode after firing may be surface-protected to prevent oxidation. The surface protection may be performed by, for example, coating with a liquid epoxy resin composition or casting a solution containing EVA, styrene, or the like.

### - Advantageous Effects of Invention

The present invention can provide a conductive paste composition that has excellent low-temperature decomposability and can be debinded at 280°C, which corresponds to a reflow soldering temperature, that can suppress oxidation of conductive metal particles, and that has excellent printability. The present invention can also provide a method for producing a conductive sheet using the conductive paste composition, a conductive sheet, and a method for producing an electronic component.

### DESCRIPTION OF EMBODIMENTS

The present invention is more specifically described in the following with reference to, but not limited to, examples.

### (Example 1)

### <Production of (meth)acrylic resin>

A 2-L separable flask equipped with a stirring device, a condenser, a thermometer, a water bath, and a nitrogen gas inlet was provided. The 2-L separable flask was charged with 65 parts by weight of isobutyl methacrylate (iBMA) and 35 parts by weight of 2-ethylhexyl methacrylate (2EHMA). They were further mixed with 100 parts by weight of terpineol as an organic solvent to give a monomer mixture solution.

The monomer mixture solution was bubbled with nitrogen gas for 20 minutes to remove dissolved oxygen to purge the solution with nitrogen gas. The internal temperature was set at 80°C with stirring, and a polymerization initiator solution diluted with butyl acetate was added. The polymerization initiator solution was added several times during the polymerization. The polymerization initiator was dilauryl peroxide.

After 7 hours from the start of the polymerization, the mixture solution was cooled to room temperature to terminate the polymerization. Thus, a (meth)acrylic resin-containing composition was obtained.

The obtained (meth)acrylic resin-containing composition was dried and dissolved in tetrahydrofuran (THF) at a resin concentration of 0.1% by weight. The resulting solution was subjected to GPC using SHODEX LF-804 as a column to measure the weight average molecular weight (Mw) in terms of polystyrene. The Mw was 100,000.

The obtained (meth)acrylic resin was subjected to pyrolysis GC-MS using JMS-Q1500GC available from JEOL Ltd. to determine the amounts of the components contained therein.

### <Production of conductive metal particles>

To 2 parts by weight of water and 40 parts by weight of methanol were added 5.4 parts by weight of copper chloride and 0.8 parts by weight of oleic acid as a dispersion stabilizer. Further, 3 parts by weight of hydrazine as reducing agent was added, and they were reacted at room temperature to give copper nanoparticle colloid. The colloid was centrifuged to sediment the solids, whereby copper nanopowder was recovered. The obtained copper nanopowder was dispersed in 50 parts by weight of terpineol. This copper nanoparticle dispersion was passed through a 0.45-µm membrane filter for filtration to remove coarse particles, and then methanol was added to the filtrate until the copper nanopowder was suspended. This was followed by centrifugation (4,000 rpm, 10 minutes) and natural drying, whereby copper oxide (Cu₂O) powder having an average particle size of 10 nm was obtained. The average particle size was measured with Zetasizer.

<Production of conductive paste composition>

The (meth)acrylic resin-containing composition was subjected to solid content measurement using a forced convection oven to determine the resin concentration.

To the (meth)acrylic resin-containing composition were added the conductive metal particles, a sintering agent, and an additional solvent according to the types and the proportions shown in Table 1. They were stirred to give a conductive paste composition.

### (Example 2)

In <Production of (meth)acrylic resin>, a (meth)acrylic resin-containing composition was obtained as in Example 1 using 80 parts by weight of isobutyl methacrylate (iBMA), 20 parts by weight of 2-ethylhexyl methacrylate (2EHMA), and dihydroterpineol as a solvent.

### <Conductive metal particles>

Copper(II) oxide powder (CuO, available from Sigma-Aldrich, average particle size of 50 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 1. They were stirred to give a conductive paste composition.

### (Example 3)

### <Production of (meth)acrylic resin>

A 2-L separable flask equipped with a stirring device, a condenser, a thermometer, a water bath, and a nitrogen gas inlet was provided. The 2-L separable flask was charged with 70 parts by weight of isobutyl methacrylate

(iBMA), 20 parts by weight of 2-ethylhexyl methacrylate (2EHMA), and 10 parts by weight of isodecyl methacrylate (iDMA). They were further mixed with 20 parts by weight of isoamyl acetate as an organic solvent to give a monomer mixture solution.

The monomer mixture solution was bubbled with nitrogen gas for 20 minutes to remove dissolved oxygen to purge the solution with nitrogen gas. The internal temperature was set at 80°C with stirring, and a polymerization initiator solution diluted with isoamyl acetate was added. The polymerization initiator solution was added several times during the polymerization. The polymerization initiator was dilauryl peroxide.

After 7 hours from the start of the polymerization, the mixture solution was cooled to room temperature to terminate the polymerization. Thus, a (meth)acrylic resin-containing composition was obtained.

### <Conductive metal particles>

Copper(II) oxide powder (CuO, available from Sigma-Aldrich, average particle size of 70 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 1. They were stirred to give a conductive paste composition.

### (Example 4)

In <Production of (meth)acrylic resin>, a (meth)acrylic resin-containing composition was obtained as in Example 1 using 80 parts by weight of isobutyl methacrylate (iBMA), 20 parts by weight of isodecyl methacrylate (iDMA), and dihydroterpineol as a solvent.

### <Conductive metal particles>

Copper(I) oxide powder (Cu₂O, available from Sigma-Aldrich, average particle size of 350 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 1. They were stirred to give a conductive paste composition.

### (Example 5)

In <Production of (meth)acrylic resin>, a (meth)acrylic resin-containing composition was obtained as in Example 3 using 50 parts by weight of isobutyl methacrylate (iBMA), 50 parts by weight of n-butyl methacrylate (nBMA), and butyl acetate as a solvent.

### <Conductive metal particles>

Silver powder (Ag, available from Filgen, average particle size of 100 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 1. They were stirred to give a conductive paste composition.

### (Example 6)

In <Production of (meth)acrylic resin>, a (meth)acrylic resin-containing composition was obtained as in Example 3 using 50 parts by weight of isobutyl methacrylate (iBMA), 30 parts by weight of 2-ethylhexyl methacrylate (2EHMA), 20 parts by weight of n-butyl methacrylate (nBMA), and xylene as a solvent.

### <Conductive metal particles>

Copper(II) oxide powder (CuO, available from Kojundo Chemical Laboratory Co., Ltd., average particle size of 1,000 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 1. They were stirred to give a conductive paste composition.

### (Example 7)

In <Production of (meth)acrylic resin>, a (meth)acrylic resin-containing composition was obtained as in Example 1 using 90 parts by weight of isobutyl methacrylate (iBMA), 5 parts by weight of 2-ethylhexyl methacrylate (2EHMA), 5 parts by weight of ethyl methacrylate (EMA), and texanol as a solvent.

### <Conductive metal particles>

Silver powder (Ag, available from Kojundo Chemical Laboratory Co., Ltd., average particle size of 1,000 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 1. They were stirred to give a conductive paste composition.

### (Example 8)

In <Production of (meth)acrylic resin>, a (meth)acrylic resin-containing composition was obtained as in Example 1 using 72 parts by weight of isobutyl methacrylate (iBMA), 8 parts by weight of 2-ethylhexyl methacrylate (2EHMA), 20 parts by weight of s-butyl methacrylate (sBMA), and dihydroterpineol acetate as a solvent.

### <Conductive metal particles>

Silver powder (Ag, available from Filgen, average particle size of 10 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 1. They were stirred to give a conductive paste composition.

### (Example 9)

In <Production of (meth)acrylic resin>, a (meth)acrylic resin-containing composition was obtained as in Example 3 using 40 parts by weight of isobutyl methacrylate (iBMA), 40 parts by weight of 2-ethylhexyl methacrylate (2EHMA), 20 parts by weight of isopropyl methacrylate (iPMA), and hexyl acetate as a solvent.

### <Production of conductive metal particles>

In <Production of conductive metal particles> of Example 1, 9.4 parts by weight of neopentyl glycol as a protecting agent was added to 100 parts by weight of the copper nanoparticle dispersion, whereby diol-protected copper nanopowder having an average particle size of 50 nm was obtained.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Example 10)

In <Production of (meth)acrylic resin>, a (meth)acrylic resin-containing composition was obtained as in Example 1 using 40 parts by weight of isobutyl methacrylate (iBMA), 30 parts by weight of 2-ethylhexyl methacrylate (2EHMA), 30 parts by weight of n-butyl methacrylate (nBMA), and terpineol as a solvent.

### <Conductive metal particles>

Copper(II) oxide (CuO, available from Japan Ion Corporation, average particle size of 100 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Example 11)

In <Production of (meth)acrylic resin>, a (meth)acrylic resin-containing composition was obtained as in Example 3 using 40 parts by weight of isobutyl methacrylate (iBMA), 40 parts by weight of 2-ethylhexyl methacrylate (2EHMA), 20 parts by weight of n-butyl methacrylate (nBMA), and butyl acetate as a solvent.

### <Conductive metal particles>

Copper(II) oxide (CuO, available from Japan Ion Corporation, average particle size of 100 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Comparative Example 1)

In <Production of (meth)acrylic resin>, a (meth)acrylic resin-containing composition was obtained as in Example 3 using 80 parts by weight of isobutyl methacrylate (iBMA), 20 parts by weight of methyl methacrylate (MMA), and butyl acetate as a solvent.

### <Conductive metal particles>

Copper(II) oxide powder (CuO, available from Japan Ion Corporation, average particle size of 100 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Comparative Example 2)

In <Production of (meth)acrylic resin>, a (meth)acrylic resin-containing composition was obtained as in Example 1 using 40 parts by weight of isobutyl methacrylate (iBMA), 60 parts by weight of ethyl methacrylate (EMA), and terpineol as a solvent.

### <Conductive metal particles>

The same copper(II) oxide powder as that used in Comparative Example 1 was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Comparative Example 3)

In <Production of (meth)acrylic resin>, a (meth)acrylic resin-containing composition was obtained as in Example 1 using 60 parts by weight of isobutyl methacrylate (iBMA), 40 parts by weight of ethyl methacrylate (EMA), and terpineol as a solvent.

### <Production of conductive metal particles>

The same copper(II) oxide powder as that used in Comparative Example 1 was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Comparative Example 4)

In <Production of (meth)acrylic resin>, a (meth)acrylic resin-containing composition was obtained as in Example 1 using 80 parts by weight of isobutyl methacrylate (iBMA), 20 parts by weight of methyl methacrylate (MMA), and diethylene glycol mono(2-ethylhexyl) ether as a solvent.

### <Production of conductive metal particles>

The same copper(II) oxide powder as that used in Comparative Example 1 was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Comparative Example 5)

In <Production of (meth)acrylic resin>, a (meth)acrylic resin-containing composition was obtained as in Example 3 using 80 parts by weight of isobutyl methacrylate (iBMA), 20 parts by weight of methyl methacrylate (MMA), and toluene as a solvent.

### <Production of conductive metal particles>

The same copper(II) oxide powder as that used in Comparative Example 1 was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Comparative Example 6)

In <Production of (meth)acrylic resin>, a (meth)acrylic resin-containing composition was obtained as in Example 1 using 80 parts by weight of isobutyl methacrylate (iBMA), 20 parts by weight of methyl methacrylate (MMA), and diethylene glycol mono(2-ethylhexyl) ether as a solvent.

### <Production of conductive metal particles>

The same silver powder (Ag, available from Filgen, average particle size of 100 nm) as that used in Example 5 was used as the conductive metal particles.

In <Production of conductive paste composition>, to the obtained (meth)acrylic resin-containing composition were added the conductive metal particles, a sintering agent, and an additional solvent according to the types and the proportions shown in Table 2. They were stirred to give a conductive paste composition.

### (Example 12)

In <Production of (meth)acrylic resin>, a (meth)acrylic resin-containing composition was obtained as in Example 1 using 50 parts by weight of isobutyl methacrylate (iBMA), 40 parts by weight of n-butyl methacrylate (nBMA), 10 parts by weight of methoxypolyethylene glycol methacrylate (number of ethylene glycol units: 9), and terpineol as a solvent.

### <Conductive metal particles>

Copper(II) oxide (CuO, available from Japan Ion Corporation, average particle size of 100 nm) was used as the conductive metal particles.

In <Production of conductive metal particles>, to the obtained (meth)acrylic resin-containing composition were added the conductive metal particles, a sintering agent, and an additional solvent according to the types and the proportions shown in Table 3. They were stirred to give a conductive paste composition.

### (Example 13)

In <Production of (meth)acrylic resin>, a (meth)acrylic resin-containing composition was obtained as in Example 1 using 80 parts by weight of isobutyl methacrylate (iBMA), 20 parts by weight of methoxypolyethylene glycol methacrylate (number of ethylene glycol units: 23), and butyl carbitol as a solvent.

### <Conductive metal particles>

Cu powder (available from Sigma-Aldrich, average particle size of 25 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 3. They were stirred to give a conductive paste composition.

### (Example 14)

In <Production of (meth)acrylic resin>, a (meth)acrylic resin-containing composition was obtained as in Example 3 using 70 parts by weight of isobutyl methacrylate (iBMA), 10 parts by weight of 2-ethylhexyl methacrylate (2EHMA), 20 parts by weight of methoxypolyethylene glycol methacrylate (number of ethylene glycol units: 4), and butyl acetate as a solvent.

### <Conductive metal particles>

Silver powder (Ag, available from Filgen, average particle size of 50 nm) was used as the conductive metal particles.

In <Production of conductive paste composition>, to the obtained (meth)acrylic resin-containing composition were added the conductive metal particles, a sintering agent, and an additional solvent according to the types and the proportions shown in Table 3. They were stirred to give a conductive paste composition.

### (Comparative Example 7)

In <Production of (meth)acrylic resin>, a (meth)acrylic resin-containing composition was obtained as in Example 1 using 30 parts by weight of isobutyl methacrylate (iBMA), 60 parts by weight of ethyl methacrylate (EMA), 10 parts by weight of methoxypolyethylene glycol methacrylate (number of ethylene glycol units: 2), and texanol as a solvent.

### <Conductive metal particles>

Silver powder (Ag, available from Filgen, average particle size of 50 nm) was used as the conductive metal particles.

In <Production of conductive metal particles>, to the obtained (meth)acrylic resin-containing composition were added the conductive metal particles, a sintering agent, and an additional solvent according to the types and the proportions shown in Table 3. They were stirred to give a conductive paste composition.

### (Example 15)

### <Production of (meth)acrylic resin>

A 2-L separable flask equipped with a stirring device, a condenser, a thermometer, a water bath, and a nitrogen gas inlet was provided. The 2-L separable flask was charged with 50 parts by weight of isobutyl methacrylate (iBMA), 20 parts by weight of 2-ethylhexyl methacrylate (2EHMA), and 30 parts by weight of n-butyl methacrylate (nBMA). They were further mixed with 10 parts by weight of butyl acetate as an organic solvent to give a monomer mixture.

The monomer mixture solution was bubbled with nitrogen gas for 20 minutes to remove dissolved oxygen to purge the solution with nitrogen gas. The internal temperature was set at 80°C with stirring, and a polymerization initiator solution diluted with butyl acetate was added. The polymerization initiator solution was added several times during the polymerization. The polymerization initiator was dilauryl peroxide.

After 7 hours from the start of the polymerization, the mixture solution was cooled to room temperature to terminate the polymerization. Thus, a (meth)acrylic resin-containing composition was obtained.

The obtained (meth)acrylic resin-containing composition was dried and dissolved in tetrahydrofuran (THF) at a resin concentration of 0.1% by weight. The resulting solution was subjected to GPC using SHODEX LF-804 as a column to measure the weight average molecular weight (Mw) in terms of polystyrene. The Mw was 500,000.

The obtained (meth)acrylic resin was subjected to pyrolysis GC-MS using JMS-Q1500GC available from JEOL Ltd. to determine the amounts of the components contained therein.

### <Production of conductive metal particles>

Copper(I) oxide (Cu₂O, available from RMML Co., Ltd., average particle size of 50 nm) was used as the conductive metal particles.

### <Production of conductive paste composition>

The (meth)acrylic resin-containing composition was subjected to solid content measurement using a forced convection oven to determine the resin concentration.

To the (meth)acrylic resin-containing composition were added the conductive metal particles, a sintering agent, and an additional solvent according to the types and the proportions shown in Table 4. They were stirred to give a conductive paste composition.

### <Production of conductive sheet and laminate sample>

The obtained conductive paste composition was applied to a release PET film using an applicator to a thickness after drying of 50 µm. The applied composition was dried in a forced convection oven at 100°C for 1 hour to give a conductive sheet.

The obtained conductive sheet was bonded to a SiC substrate having a thickness of 50 µm. The release PET film was removed, and the exposed side was bonded to a copper substrate to give a copper substrate-conductive sheet-SiC substrate laminate. The obtained laminate was pressed using a press machine at 100°C at 3 MPa, and then fired in a firing furnace in a nitrogen atmosphere at 250°C for 20 minutes to pyrolyze the organic matter in the conductive sheet and sinter the copper. This was followed by cooling to room temperature in a nitrogen atmosphere, whereby a laminate sample was obtained.

### (Example 16)

A conductive paste composition, a conductive sheet, and a laminate sample were obtained as in Example 15 except that the type of the sintering agent was changed as shown in Table 4.

### (Example 17)

A conductive paste composition, a conductive sheet, and a laminate sample were obtained as in Example 15 except that in <Production of (meth)acrylic resin>, 30 parts by weight of isobutyl methacrylate (iBMA), 40 parts by weight isodecyl methacrylate (iDMA), and 30 parts by weight of methyl methacrylate (MMA) were used, and that the conductive metal particles, the sintering agent, and the additional solvent were added according to the types and proportions shown in Table 4.

### (Example 18)

A conductive paste composition, a conductive sheet, and a laminate sample were obtained as in Example 17 except that the type of the sintering agent was changed as shown in Table 4.

### (Comparative Example 8)

A conductive paste composition, a conductive sheet, and a laminate sample were obtained as in Example 15 except that in <Production of (meth)acrylic resin>, 40 parts by weight of 2-ethylhexyl methacrylate (2EHMA), 30 parts by weight of ethyl methacrylate (EMA), and 30 parts by weight of n-butyl methacrylate (nBMA) were used, and that the conductive metal particles, the sintering agent, and the additional solvent were added according to the types and proportions shown in Table 4.

### (Comparative Example 9)

A conductive paste composition, a conductive sheet, and a laminate sample were obtained as in Comparative Example 8 except that the conductive metal particles, the sintering agent, and the additional solvent were added according to the types and proportions shown in Table 4.

### (Comparative Example 10)

A conductive paste composition, a conductive sheet, and a laminate sample were obtained as in Comparative Example 8 except that the conductive metal particles, the sintering agent, and the additional solvent were added according to the types and proportions shown in Table 4.

**[Table 1]**

| | Conductive paste composition | | | | | | | | | | | | | | | | | |
|---|---|---|---|---|---|---|---|---|---|---|---|---|---|---|---|---|---|---|
| | (Meth)acrylic resin (A) | | | | | | | | Conductive metal particle (B) | | | Solvent (C) | | | Sintering aid (D) | | | |
| | Branched monomer (% by weight) | | | | Linear monomer (% by weight) | | Weight average molecular weight (Mw) | Amount (% by weight) | Type | Average particle size (nm) | Amount (% by weight) | Type | Boiling point (°C) | Amount (% by weight) | Name | Oxygen content (% by weight) | Boiling point (°C) | Amount (% by weight) |
| | iBMA | 2EHMA | sBMA | iDMA | EMA | nBMA | | | | | | | | | | | | |
| Example 1 | 65 | 35 | - | - | - | - | 100000 | 4 | Cu₂O | 10 | 90 | Terpineol | 219 | 5.2 | Tripropyl citrate | 35 | 318 | 0.8 |
| Example 2 | 80 | 20 | - | - | - | - | 100000 | 4 | CuO | 50 | 90 | Dihydroterpineol | 246 | 5.2 | Triethyl acetylcitrate | 40 | 318 | 0.8 |
| Example 3 | 70 | 20 | - | 10 | - | - | 300000 | 4 | CuO | 70 | 90 | Isoamyl acetate | 142 | 5.2 | Triethyl citrate | 41 | 276 | 0.8 |
| Example 4 | 80 | - | - | 20 | - | - | 100000 | 4 | Cu₂O | 350 | 90 | Dihydroterpineol | 246 | 5.2 | Tributyl acetylcitrate | 32 | 402 | 0.8 |
| Example 5 | 50 | - | - | - | - | 50 | 300000 | 4 | Ag | 100 | 90 | Butyl acetate | 126 | 5.2 | Tributyl citrate | 31 | 360 | 0.8 |
| Example 6 | 50 | 30 | - | - | - | 20 | 300000 | 4 | CuO | 1000 | 90 | Xylene | 139 | 5.2 | Dimethyl acetylsuccinate | 43 | 188 | 0.8 |
| Example 7 | 90 | 5 | - | - | 5 | - | 100000 | 4 | Ag | 1000 | 90 | Texanol | 244 | 5.2 | Tripropionin | 37 | 310 | 0.8 |
| Example 8 | 72 | 8 | 20 | - | - | - | 100000 | 4 | Ag | 10 | 90 | Dihydroterpineol acetate | 246 | 5.2 | Triacetin | 44 | 258 | 0.8 |

**[Table 2]**

| | Conductive paste composition | | | | | | | | | | | | | | | | | |
|---|---|---|---|---|---|---|---|---|---|---|---|---|---|---|---|---|---|---|
| | (Meth)acrylic resin (A) | | | | | | | | Conductive metal particle (B) | | | Solvent (C) | | | Sintering aid (D) | | | |
| | Branched monomer (% by weight) | | | Linear monomer (% by weight) | | | Weight average molecular weight (Mw) | Amount (% by weight) | Type | Average particle size (nm) | Amount (% by weight) | Type | Boiling point (°C) | Amount (% by weight) | Name | Oxygen content (% by weight) | Boiling point (°C) | Amount (% by weight) |
| | iBMA | 2EHMA | iPMA | MMA | EMA | nBMA | | | | | | | | | | | | |
| Example 9 | 40 | 40 | 20 | - | - | - | 300000 | 4 | Diol-protected Cu | 50 | 90 | Hexyl acetate | 172 | 5.2 | Pentaerythritol tetraacetate | 42 | 325 | 0.8 |
| Example 10 | 40 | 30 | - | - | - | 30 | 100000 | 4 | CuO | 100 | 90 | Terpineol | 219 | 5.2 | Succinic anhydride | 48 | 261 | 0.8 |
| Example 11 | 40 | 40 | - | - | - | 20 | 300000 | 4 | CuO | 100 | 90 | Butyl acetate | 126 | 5.2 | Maleic anhydride | 49 | 202 | 0.8 |
| Comparative Example 1 | 80 | - | - | 20 | - | - | 300000 | 4 | CuO | 100 | 90 | Butyl acetate | 126 | 5.2 | Triethylene glycol dihexanoate | 28 | 344 | 0.8 |
| Comparative Example 2 | 40 | - | - | - | 60 | - | 100000 | 4 | CuO | 100 | 90 | Terpineol | 219 | 5.2 | Dimethyl phthalate | 33 | 222 | 0.8 |
| Comparative Example 3 | 60 | - | - | - | 40 | - | 100000 | 4 | CuO | 100 | 90 | Terpineol | 219 | 5.2 | Triethylene glycol dihexanoate | 28 | 344 | 0.8 |
| Comparative Example 4 | 80 | - | - | 20 | - | - | 100000 | 4 | CuO | 100 | 90 | Diethylene glycol mono(2-ethylhexyl) ether | 272 | 4.5 | Triethylene glycol dihexanoate | 28 | 344 | 1.5 |
| Comparative Example 5 | 80 | - | - | 20 | - | - | 300000 | 4 | CuO | 100 | 90 | Toluene | 110 | 5.7 | Dimethyl phthalate | 33 | 222 | 0.3 |
| Comparative Example 6 | 80 | - | - | 20 | - | - | 100000 | 4 | Ag | 100 | 90 | Diethylene glycol mono(2-ethylhexyl) ether | 272 | 5.2 | Dimethyl phthalate | 33 | 222 | 0.8 |

**[Table 3]**

| | Conductive paste composition | | | | | | | | | | | | | | | | | | | |
|---|---|---|---|---|---|---|---|---|---|---|---|---|---|---|---|---|---|---|---|---|
| | (Meth)acrylic resin (A) | | | | | | | | | | Conductive metal particle (B) | | | Solvent (C) | | | Sintering aid (D) | | | |
| | Branched monomer (% by weight) | | Linear monomer (% by weight) | | Alkylene oxide monomer | | | | Weight average molecular weight (Mw) | Amount (% by weight) | Type | Average particle size (nm) | Amount (% by weight) | Type | Boiling point (°C) | Amount (% by weight) | Name | Oxygen content (% by weight) | Boiling point (°C) | Amount (% by weight) |
| | iBMA | 2EHMA | EMA | nBMA | Monomer name | Structure | Oxygen content (% by weight) | Amount (% by weight) | | | | | | | | | | | | |
| Example 12 | 50 | - | - | 40 | Methoxy polyethylene glycol methacrylate | C₂₃H₄₄O₁₁ | 35 | 10 | 100000 | 4 | CuO | 100 | 90 | Terpineol | 219 | 5.2 | 3-Oxoglutaric acid | 55 | 408 | 0.8 |
| Example 13 | 80 | - | - | - | Methoxy polyethylene glycol methacrylate | C₅₁H₁₀₀O₂₅ | 36 | 20 | 100000 | 4 | Cu | 25 | 90 | Butyl carbitol | 231 | 5.2 | Monomethyl adipate | 40 | 310 | 0.8 |
| Example 14 | 70 | 10 | - | - | Methoxy polyethylene glycol methacrylate | C₁₃H₂₄O₆ | 35 | 20 | 300000 | 4 | Ag | 50 | 90 | Butyl acetate | 126 | 5.2 | Suberic acid | 37 | 390 | 0.8 |
| Comparative Example 7 | 30 | - | 60 | - | Methoxy polyethylene glycol methacrylate | C₉H₁₆O₄ | 34 | 10 | 100000 | 4 | Ag | 50 | 90 | Texanol | 244 | 5.2 | **Triethylene** glycol dihexanoate | 28 | 344 | 0.8 |

**[Table 4]**

| | Conductive paste composition | | | | | | | | | | | | | | | | | | Conductive paste (% by weight) | | |
|---|---|---|---|---|---|---|---|---|---|---|---|---|---|---|---|---|---|---|---|---|---|
| | (Meth)acrylic resin (A) | | | | | | | | Conductive metal particle (B) | | | Solvent (C) | | | Sintering aid (D) | | | | (Meth)acrylic resin (A) | Conductive metal particle (B) | Sintering aid (D) |
| | Branched monomer (% by weight) | | | Linear monomer (% by weight) | | | Weight average molecular weight (Mw) | Amount (% by weight) | Type | Average particle size (nm) | Amount (% by weight) | Type | Boiling point (°C) | Amount (% by weight) | Name | Oxygen content (% by weight) | **Boiling** point (°C) | Amount (% by weight) | | | |
| | iBMA | 2EHMA | iDMA | MMA | EMA | nBMA | | | | | | | | | | | | | | | |
| Example 15 | 50 | 20 | - | - | - | 30 | 500000 | 8.7 | Cu₂O | 50 | 77.4 | Butyl acetate | 126 | 13 | Diglycolic anhydride | 55 | 240 | 0.9 | 10 | 89 | 1 |
| Example 16 | 50 | 20 | - | - | - | 30 | 500000 | 8.7 | Cu₂O | 50 | 77.4 | Butyl acetate | 126 | 13 | 2-Methoxyacetic anhydride | 49 | 240 | 0.9 | 10 | 89 | 1 |
| Example 17 | 30 | - | 40 | 30 | - | - | 500000 | 8.7 | Cu₂O | 50 | 75.7 | Butyl acetate | 126 | 13 | Citric anhydride | 55 | 520 | 2.6 | 10 | 87 | 3 |
| Example 18 | 30 | - | 40 | 30 | - | - | 500000 | 8.7 | Cu₂O | 50 | 75.7 | Butyl acetate | 126 | 13 | Butane tetracarboxylic dianhydride | 49 | 492 | 2.6 | 10 | 87 | 3 |
| Comparative Example 8 | - | 40 | - | - | 30 | 30 | 500000 | 8.7 | Cu₂O | 50 | 77.9 | Butyl acetate | 126 | 13 | Hexanoic anhydride | 22 | 244 | 0.4 | 10 | 89.5 | 0.5 |
| Comparative Example 9 | - | 40 | - | - | 30 | 30 | 500000 | 8.7 | Cu₂O | 50 | 74.8 | Butyl acetate | 126 | 13 | Pentanoic anhydride | 26 | 227 | 3.5 | 10 | 86 | 4 |
| Comparative Example 10 | - | 40 | - | - | 30 | 30 | 500000 | 8.7 | Cu₂O | 50 | 77.4 | Butyl acetate | 126 | 13 | Malonic acid | 62 | - | 0.9 | 10 | 89 | 1 |

### <Evaluation>

The following evaluations were performed on the conductive paste compositions obtained in the examples and comparative examples. Tables 5 to 7 show the results.

### (1) Paste storage stability

The conductive paste compositions obtained in Examples 1 to 14 and Comparative Examples 1 to 7 were left to stand at room temperature for 1 day, and the dispersion state of the paste compositions was checked and evaluated in accordance with the following criteria.

A conductive paste composition having excellent paste storage stability can be said to have excellent printability.
∘ (Good): There was no change in the dispersion state.
Δ (Fair): There was a clear supernatant layer, and there was no metal sediment layer at the bottom of the container.
× (Poor): There was a metal sediment layer at the bottom of the container.

### (2) Residual carbon

### (2-1) Production of conductive sheet

The conductive paste compositions obtained in Examples 1 to 14 and Comparative Examples 1 to 7 were applied to a release PET film using an applicator to a thickness after drying of 50 µm. The applied compositions were dried in a forced convection oven at 150°C for 1 hour to give conductive sheets.

### (2-2) Residual carbon

The obtained conductive sheets were fired in an electric furnace at 280°C under nitrogen gas reflux, taken out of the oven after 30 minutes, and cooled in a nitrogen atmosphere to give fired conductive sheets (fired articles). The residual carbon content of the obtained fired articles was measured using a carbon/sulfur analyzer (available from ELTRA, "CA-i") and evaluated in accordance with the following criteria.

A low residual carbon content can be said to indicate a conductive paste composition having excellent low-temperature decomposability.
∘ (Good): A residual carbon content of 20 ppm or less
× (Poor): A residual carbon content of more than 20 ppm

### (3) Volume resistivity

The volume resistivity of the sintered articles obtained in "(2) Residual carbon" was measured using "Loresta AX-MCP-T370" available from Mitsubishi Chemical Analytech Co., Ltd. and evaluated in accordance with the following criteria.

A low volume resistivity can be said to indicate sufficient prevention of oxidation of the conductive metal particles.
∘ (Good): A volume resistivity of 10 µΩ·cm or higher and 50 µΩ·cm or lower
Δ (Fair): A volume resistivity of higher than 50 µΩ·cm and 100 µΩ·cm or lower
× (Poor): A volume resistivity of higher than 100 µΩ·cm

### (4) Degree of oxidation

The spectra of the sintered articles obtained in "(2) Residual carbon" were determined using a Raman microscope spectrometer (available from Tokyo Instruments, Inc., "Nanofinder") and evaluated in accordance with the following criteria.

In Examples 1 to 4, 6, and 10 to 12, in which copper oxide(I) powder (Cu₂O) or copper(II) oxide powder (CuO) was used as the conductive metal particles, neither a scattering band of CuO nor a scattering band of Cu₂O was detected. This suggests that the firing in a nitrogen atmosphere converted the copper oxide into copper. The absence of the scattering bands of copper oxide and iron oxide can be said to indicate sufficient suppression of surface oxidation of the conductive metal particles.
∘ (Good): Neither a scattering band of copper oxide around 200 cm⁻¹ nor a scattering band of silver oxide around 700 cm⁻¹ was detected.
× (Poor): A scattering band of copper oxide around 200 cm⁻¹ was detected, or a scattering band of silver oxide around 700 cm⁻¹ was detected.

### (5) Decomposition percentage

The conductive paste compositions obtained in Examples 1 to 14 and Comparative Examples 1 to 7 were applied to a release PET film using an applicator to a thickness after drying of 300 µm. The applied compositions were dried in a forced convection oven at 120°C for 1 hour to give formed articles. The weight WA of each of the obtained formed articles was measured. The temperature was raised using a thermogravimetric-differential thermal analyzer (TG-DTA) from normal temperature to 280°C at a temperature rise rate of 10°C/min in nitrogen atmosphere and then held at 280°C for 1 hour. The weight WB of the formed article was measured. The decomposition percentage was calculated based on the following expression based on the WA, the WB, and the WC, i.e., the amount of the inorganic particles in the formed article. Decomposition percentage (% by weight) = (WA - WB)/(WA - WC) × 100

### (6) Sheet storage stability

The conductive sheets obtained in Examples 15 to 18 and Comparative Example 8 to 10 were left to stand at room temperature for 1 day, and the dispersion state of the sheets was checked and evaluated in accordance with the following criteria.
∘ (Good): There was no change in the dispersion state.
× (Poor): Organic matter separated and precipitated.

### (7) Volume resistivity

The volume resistivity of the laminate samples obtained in Examples 15 to 18 and Comparative Examples 8 to 10 was measured using "Loresta AX-MCP-T370" available from Mitsubishi Chemical Analytech Co., Ltd. and evaluated in accordance with the following criteria.

A low volume resistivity can be said to indicate sufficient prevention of oxidation of the conductive metal particles.
∘ (Good): A volume resistivity of 10 µΩ·cm or higher and 100 µΩ·cm or lower
× (Poor): A volume resistivity of higher than 100 µΩ·cm

### (8) Degree of oxidation

The spectra of the laminate samples obtained in Examples 15 to 18 and Comparative Examples 8 to 10 were determined using a Raman microscope spectrometer (available from Tokyo Instruments, Inc., "Nanofinder") and evaluated in accordance with the following criteria.
∘ (Good): No scattering band of copper oxide around 200 cm⁻¹ was detected.
× (Poor): A scattering band of copper oxide around 200 cm⁻¹ was detected.

### (9) Cross sectional observation

The laminate samples obtained in Examples 15 to 18 and Comparative Examples 8 to 10 were subjected to cross sectional observation at a bonding portion using a scanning electron microscope and evaluated in accordance with the following criteria.
∘ (Good): No large crack or void was observed in the cross section.
× (Poor): A large crack or void was observed in the cross section.

All the samples of Example 15 to 18 showed good results. In contrast, the samples of Comparative Examples 8 and 9 had distorted cross sections with cracks at bonding surfaces due to insufficient progress of copper sintering. The sample of Comparative Example 10 had separation of the added malonic acid and had a void.

**[Table 5]**

| | Paste storage stability | | Residual carbon | | Volume resistivity | | Degree of oxidation | | Decomposition percentage (% by weight) |
|---|---|---|---|---|---|---|---|---|---|
| | State | Rating | Measured value (ppm) | Rating | Measured value (µΩ·cm) | Rating | Raman microscopy | Rating | |
| Example 1 | No change | ○ | 9 | ○ | 26 | ○ | No scattering band | ○ | 99 |
| Example 2 | No change | ○ | 10 | ○ | 20 | ○ | No scattering band | ○ | 99 |
| Example 3 | No change | ○ | 10 | ○ | 24 | ○ | No scattering band | ○ | 99 |
| Example 4 | No change | ○ | 8 | ○ | 29 | ○ | No scattering band | ○ | 99 |
| Example 5 | No change | ○ | 10 | ○ | 26 | ○ | No scattering band | ○ | 99 |
| Example 6 | Clear supernatant | △ | 20 | ○ | 37 | ○ | No scattering band | ○ | 98 |
| Example 7 | Clear supernatant | △ | 15 | ○ | 43 | ○ | No scattering band | ○ | 98 |
| Example 8 | No change | ○ | 12 | ○ | 30 | ○ | No scattering band | ○ | 100 |
| Example 9 | No change | ○ | 20 | ○ | 29 | ○ | No scattering band | ○ | 100 |
| Example 10 | No change | ○ | 10 | ○ | 14 | ○ | No scattering band | ○ | 100 |
| Example 11 | No change | ○ | 11 | ○ | 15 | ○ | No scattering band | ○ | 100 |

**[Table 6]**

| | Paste storage stability | | Residual carbon | | Volume resistivity | | Degree of oxidation | | Decomposition percentage (% by weight) |
|---|---|---|---|---|---|---|---|---|---|
| | State | Rating | Measured value (ppm) | Rating | Measured value (µΩ·cm) | Rating | Raman microscopy | Rating | |
| Comparative Example 1 | Clear supernatant | △ | 40 | × | 180 | × | Scattering band detected around 200 cm⁻¹ | × | 80 |
| Comparative Example 2 | No change | ○ | 120 | × | 96 | Δ | Scattering band detected around 200 cm⁻¹ | × | 90 |
| Comparative Example 3 | No change | ○ | 60 | × | 73 | Δ | Scattering band detected around 200 cm⁻¹ | × | 80 |
| Comparative Example 4 | No change | ○ | 70 | × | 200 | × | Scattering band detected around 200 cm⁻¹ | × | 80 |
| Comparative Example 5 | Sediment layer present | × | 100 | × | 80 | Δ | Scattering band detected around 200 cm⁻¹ | × | 90 |
| Comparative Example 6 | No change | ○ | 34 | × | 47 | ○ | Scattering band detected around 700 cm⁻¹ | × | 88 |
| Example 12 | No change | ○ | 9 | ○ | 14 | ○ | No scattering band | ○ | 100 |
| Example 13 | No change | ○ | 20 | ○ | 18 | ○ | No scattering band | ○ | 100 |
| Example 14 | No change | ○ | 18 | ○ | 19 | ○ | No scattering band | ○ | 100 |
| Comparative Example 7 | No change | ○ | 21 | × | 54 | Δ | Scattering band detected around 700 cm⁻¹ | × | 85 |

**[Table 7]**

| | Sheet storage stability | | Volume resistivity | | Degree of oxidation | | Cross sectional observation | |
|---|---|---|---|---|---|---|---|---|
| | State | Rating | Measured value (µΩ·cm) | Rating | Raman microscopy | Rating | SEM | Rating |
| Example 15 | Smooth | ○ | 10 | ○ | No scattering band | ○ | Good | ○ |
| Example 16 | Smooth | ○ | 11 | ○ | No scattering band | ○ | Good | ○ |
| Example 17 | Smooth | ○ | 9 | ○ | No scattering band | ○ | Good | ○ |
| Example 18 | Smooth | ○ | 16 | ○ | No scattering band | ○ | Good | ○ |
| Comparative Example 8 | Smooth | ○ | 110 | × | Scattering band detected around 200 cm⁻¹ | × | Crack | × |
| Comparative Example 9 | Smooth | ○ | 110 | × | Scattering band detected around 200 cm⁻¹ | × | Crack | × |
| Comparative Example 10 | Separation | × | 40 | ○ | No scattering | ○ | Void | × |

### INDUSTRIAL APPLICABILITY

The present invention can provide a conductive paste composition that has excellent low-temperature decomposability and can be debinded at 280°C, which corresponds to a reflow soldering temperature, that can suppress oxidation of conductive metal particles, and that has excellent printability. The present invention also aims to provide a method for producing a conductive sheet using the conductive paste composition, a conductive sheet, and a method for producing an electronic component.

## Claims

1. A conductive paste composition comprising:
a (meth)acrylic resin (A);
inorganic particles (B);
a solvent (C); and
a sintering aid (D);
the (meth)acrylic resin (A) containing 50% by weight or more of a segment derived from a (meth)acrylate containing an ester substituent having a branched structure,
the inorganic particles (B) including conductive metal particles having an average particle size of 10 nm or greater and 1,000 nm or less,
the solvent (C) having a boiling point of 120°C or higher and 250°C or lower,
the sintering aid (D) having an oxygen element content of 30% by weight or more in a molecule.

2. The conductive paste composition according to claim 1,
wherein the inorganic particles (B) include copper-containing conductive metal particles, and
the sintering aid (D) contains at least one selected from the group consisting of adipic acid and its derivatives, glutaric acid and its derivatives, pimelic acid and its derivatives, suberic acid and its derivatives, citric acid and its derivatives, succinic acid and its derivatives, maleic acid and its derivatives, malonic acid and its derivatives, tricarballylic acid and its derivatives, trimellitic acid and its derivatives, itaconic acid and its derivatives, citraconic acid and its derivatives, diglycolic acid and its derivatives, **2-**methoxyacetic acid and its derivatives, butanetetracarboxylic acid and its derivatives, glycerol derivatives, and pentaerythritol derivatives.

3. The conductive paste composition according to claim 2,
wherein the sintering aid (D) is a polycarboxylic anhydride.

4. The conductive paste composition according to any one of claims 1 to 3,
wherein the (meth)acrylic resin (A) contains at least one selected from the group consisting of a segment derived from isobutyl methacrylate and a segment derived from 2-ethylhexyl methacrylate as the segment derived from a (meth)acrylate containing an ester substituent having a branched structure.

5. The conductive paste composition according to claim 4,
wherein the (meth)acrylic resin (A) further contains a segment derived from n-butyl methacrylate.

6. The conductive paste composition according to any one of claims 3 to 5,
wherein a total amount of a segment derived from isobutyl methacrylate, a segment derived from n-butyl methacrylate, and a segment derived from 2-ethylhexyl methacrylate is 80% by weight or more in the (meth)acrylic resin (A).

7. The conductive paste composition according to any one of claims 1 to 6,
wherein an amount of the sintering aid (D) is 10 parts by weight or more and 30 parts by weight or less relative to 100 parts by weight of the (meth)acrylic resin (A).

8. The conductive paste composition according to any one of claims 1 to 7,
wherein the (meth)acrylic resin (A) further contains a segment derived from a polyalkylene glycol (meth)acrylate containing a linear alkylene glycol unit and having an oxygen element content of 10% by weight or more.

9. The conductive paste composition according to any one of claims 1 to 8,
wherein the conductive paste composition has a decomposition percentage excluding the inorganic particles (B) of 95% by weight or higher when the conductive paste is printed at a thickness of 0.3 mm, dried in a forced convection oven at 120°C for 1 hour, then heated to 280°C at a temperature rise rate of 10°C/min in a nitrogen atmosphere, and held at 280°C for 1 hour.

10. A method for producing a conductive sheet, comprising the steps of:
coating a release substrate with the conductive paste composition according to any one of claims 1 to 9; and
drying the coated release substrate.

11. A conductive sheet comprising:
a (meth)acrylic resin (A);
inorganic particles (B); and
a sintering aid (D);
the (meth)acrylic resin (A) containing 50% by weight or more of a segment derived from a (meth)acrylate containing an ester substituent having a branched structure,
the inorganic particles (B) including conductive metal particles having an average particle size of 10 nm or greater and 1,000 nm or less,
the sintering aid (D) having an oxygen element content of 30% by weight or more in a molecule.

12. The conductive sheet according to claim 11,
wherein the sintering aid (D) contains at least one selected from the group consisting of adipic acid and its derivatives, glutaric acid and its derivatives, pimelic acid and its derivatives, suberic acid and its derivatives, citric acid and its derivatives, succinic acid and its derivatives, maleic acid and its derivatives, malonic acid and its derivatives, tricarballylic acid and its derivatives, trimellitic acid and its derivatives, itaconic acid and its derivatives, citraconic acid and its derivatives, diglycolic acid and its derivatives, 2-methoxyacetic acid and its derivatives, butanetetracarboxylic acid and its derivatives, glycerol derivatives, and pentaerythritol derivatives.

13. The conductive sheet according to claim 12,
wherein the sintering aid (D) is a polycarboxylic anhydride.

14. The conductive sheet according to any one of claims 11 to 13,
wherein the (meth)acrylic resin (A) contains at least one selected from the group consisting of a segment derived from isobutyl methacrylate and a segment derived from 2-ethylhexyl methacrylate as the segment derived from a (meth)acrylate containing an ester substituent having a branched structure.

15. The conductive sheet according to claim 14, wherein the (meth)acrylic resin (A) further contains a segment derived from n-butyl methacrylate.

16. The conductive sheet according to any one of claims 13 to 15, wherein a total amount of a segment derived from isobutyl methacrylate, a segment derived from n-butyl methacrylate, and a segment derived from 2-ethylhexyl methacrylate is 80% by weight or more in the (meth)acrylic resin (A).

17. The conductive sheet according to any one of claims 11 to 16,
wherein an amount of the sintering aid (D) is 10 parts by weight or more and 30 parts by weight or less relative to 100 parts by weight of the (meth)acrylic resin (A).

18. The conductive sheet according to any one of claims 11 to 17,
wherein the (meth)acrylic resin (A) further contains a segment derived from a polyalkylene glycol (meth)acrylate containing a linear alkylene glycol unit and having an oxygen element content of 10% by weight or more.

19. A method for producing an electronic component, comprising the steps of:
drying the conductive paste composition according to any one of claims 1 to 9; and
firing at a temperature of 280°C or lower after the drying.

20. A method for producing an electronic component, comprising the step of firing the conductive sheet according to any one of claims 11 to 18 at a temperature of 280°C or lower.
